# EUROPÄISCHE PATENTSCHRIFT

(11) **EP 2 664 597 B1**
(45) Veröffentlichungstag und Bekanntmachung des Hinweises auf die Patenterteilung: **09.05.2018**
(21) Anmeldenummer: 13001708.0
(22) Anmeldetag: 04.04.2013
(51) Int. Cl.: C04B 28/08

(54) **BINDEMITTELMISCHUNG UND TROCKENMÖRTELZUSAMMENSETZUNG**
BINDING AGENT MIXTURE AND DRY MORTAR COMPOSITION
MÉLANGE DE LIANT ET COMPOSITION DE MORTIER SEC

(30) Priorität: 16.05.2012 DE 102012009722
(43) Veröffentlichungstag der Anmeldung: 20.11.2013
(73) Patentinhaber: quick-mix Gruppe GmbH & Co. KG, 49090 Osnabrück (DE)
(72) Erfinder: Kanig, Martin, 49565 Bramsche (DE); Bühning, Volker, 49163 Bohmte (DE); Huckriede, Margret, 49143 Bissendorf (DE)
(74) Vertreter: Busse & Busse

(56) Entgegenhaltungen:
- EP-A2- 0 675 088
- AT-B- 408 983
- AU-B2- 533 607
- CA-A1- 2 782 232
- DE-A1-102006 057 076

## Beschreibung

Die Erfindung betrifft eine Bindemittelmischung zur Herstellung von Zement und dergleichen Baustoffe enthaltend Portlandzement und Hüttensand. Die Erfindung betrifft ferner eine Trockenmörtelzusammensetzung enthaltend eine derartige Bindemittelmischung.

Portlandzement wird aus einem Rohstoffgemisch enthaltend Calciumcarbonat und Ton hergestellt. Das Rohstoffgemisch wird dabei auf eine Temperatur von etwa 1400°C bis 1500°C erhitzt. Hierbei reagiert unter anderem das Calciumcarbonat zu Calciumoxid und Kohlendioxid. Das Kohlendioxid entweicht anschließend in die Atmosphäre. Die Herstellung des Portlandzements benötigt aufgrund der hohen Temperaturen sehr viel Energie. Zudem zählt die Herstellung von Portlandzement zu den zehn größten Kohlendioxid-Verursachern. Die Einsparung von Energie und die Vermeidung des Treibhausgases Kohlendioxid sind bereits seit vielen Jahren erwünschte Ziele der Industrie. Aus diesem Grund bemüht sich die Zementindustrie seit langem, Bindemittelmischungen zur Herstellung von Zement, Beton, Mörtel, Estrich u. dgl. Baustoffe bereitzustellen, die möglichst wenig Portlandzement und dafür mehr Zusatzstoffe wie z.B. Trassmehl, Flugasche oder Hüttensandmehl enthalten.

In der DIN EN 197 Teil 1 sind die derzeit zugelassenen 27 Normalzemente aufgeführt. Je weniger Portlandzement enthalten ist, desto weniger schnell wird der Zement fest. Nach einer Verarbeitungszeit, innerhalb derer der Zement auf der Baustelle verarbeitet wird, soll der Zement bei vielen Mörtelanwendungen jedoch möglichst zügig erhärten.

Derjenige Normalzement mit dem geringsten Anteil an Portlandzement ist derzeit der Hochofenzement CEM III/C. Der Zement enthält 5 bis 19% Portlandzement, 81 bis 95% Hüttensand sowie bis zu 5% weitere Nebenbestandteile. Dieser Zement weist jedoch eine geringe Druckfestigkeit und auch lediglich eine geringe frühe Verbundfestigkeit in Fugen zwischen Steinen auf.

In der DE 298 25 081 U1 ist zudem eine schnellerstarrende hydraulische Bindemittelzusammensetzung beschrieben. In der Literatur werden dfiese auch als "Löffelbinder" bezeichnet. Schon während des Anrührens mit Wasser erstarren diese "Löffelbinder" unter deutlich spürbarer Wärmeentwicklung. Hauptbestandteile der Bindemittelzusammensetzung sind eine sulfatträgerfreie Bindemittelkomponente und ein Polycarboxylat. Die Bindemittelkomponente kann dabei Portlandzementklinkermehl, Hüttensand, Calcium-Aluminate, Erdalkalihydroxide und Calciumformiate sowie weitere Verbindungen enthalten. Ein Anteil an Schwefelsäureanhydrid in der Mischung ist jedoch nicht vorgesehen. Auch wird auf die Verhältnismäßigkeit der Anteile einzelner Komponenten relativ zueinander nicht eingegangen.

Aus der AT 408 983 B ist zudem ein hydraulisches Bindemittel bekannt, bei dem minderwertige Schlacken zum Einsatz kommen und die dennoch ein hochwertiges Produkt ergeben sollen. Das Bindemittel enthält Hochofenschlacke, Portlandzement, Calciumsulfatanhydrit, Kalkhydrat und Calciumformiat sowie weitere Komponenten.

Ein Zusatz von Calciumaluminat ist jedoch nicht vorgesehen. Zudem sind einzelne Komponenten auch nicht in einem engen Massenverhältnis relativ zueinander vorgesehen. WO2011/064378A1 zeigt ein hydraulisches Bindemittel enthaltend Hochofenschlacke, Portlandzementklinker und mindestens ein Sulfat als Anregerkomponente.

Der Erfindung liegt die Aufgabe zugrunde, eine Bindemittelmischung zur Herstellung von Zement der eingangs genannten Art sowie eine Trockenmörtelzusammensetzung enthaltend eine derartige Bindemittelmischung bereitzustellen, die trotz des geringen Anteils an Portlandzement eine gute Druckfestigkeit aufweist.

Die Erfindung wird durch eine Bindemittelmischung der eingangs genannten Art realisiert, die die Merkmale des kennzeichnenden Teils des Anspruchs 1 aufweisen. Die Erfindung wird ferner durch eine Trockenmörtelzusammensetzung gemäß Anspruch 12 realisiert.

Erfindungsgemäß enthält die Bindemittelmischung Calciumformiat in einem Anteil von 0,1 bis 5 Gew.-%, Kalkhydrat in einem Anteil von 0,1 bis 5 Gew.-% und 0,1 bis 5 Gew.-% einer Startermischung aus amorphem, wasserfreiem Calcium-Aluminat, deren oxidische Zusammensetzung aus Calciumoxid, Aluminiumoxid und Schwefeltrioxid besteht. Die drei Bestandteile Calciumformiat, Startermischung und Kalkhydrat sind zudem in einem Massenverhältnis relativ zueinander enthalten, bei dem keiner der drei Bestandteile mehr als dreimal soviel enthalten ist wie einer der beiden anderen Bestandteile. Die genannten Massenanteile beziehen sich jeweils auf die Bindemittelmischung insgesamt. Eine in der Bindemittelmischung möglicherweise enthaltene Gesteinskörnung wird bei der Berechnung der Massenanteile nicht berücksichtigt. Überraschenderweise hat sich herausgestellt, dass eine Kombination dieser drei Bestandteile in dem speziellen erfindungsgemäß vorgegebenen Massenverhältnis relativ zueinander und mit den jeweils erfindungsgemäß vorgegebenen minimalen und maximalen Anteilen in der Bindemittelmischung dazu führt, dass ein mit der Bindemittelmischung hergestellter zementärer Baustoff eine gute Druckfestigkeit aufweist sowie eine sehr gute frühe Verbundfestigkeit in Fugen zwischen Steinen. Der Zement ist dadurch zur Herstellung eines Dünnbettmörtels geeignet. Die Festigkeiten eines Zements, hergestellt aus der erfindungsgemäßen Bindemittelmischung geht deutlich über die anhand der Einzelbestandteile zu erwartenden Festigkeit hinaus. Möglicherweise wird die Oberfläche des Hüttensandes von den Bestandteilen Calciumformiat, Startermischung und Kalkhydrat angeregt und chemisch zu Verbindungen mit benachbartem Hüttensand umgesetzt. Auf den Vergleich der Festigkeiten eines Zements hergestellt mit einer erfindungsgemäßen Bindemittelmischung relativ zu einem Zement CEM III/C am Ende der Beschreibung wird verwiesen.

In einer bevorzugten Ausgestaltung der Erfindung besteht die oxidische Zusammensetzung der Startermischung zu 20 bis 25 Gew.-% aus Aluminium(III)-oxid, zu 38 bis 45 Gew.-% aus Calciumoxid und zu 25 bis 30 Gew.-% aus Schwefeltrioxid. Die Einstellung der amorphen Verbindung auf diese Massenanteile hat sich als besonders effektiv im Zusammenspiel mit Calciumformiat und Kalkhydrat herausgestellt.

Mit Vorteil ist Portlandzement in der Bindemittelmischung mit einem Anteil von weniger als 9 Gew.-%, insbesondere weniger als 5 Gew.-%, enthalten. Unabhängig hiervon sind das Calciumformiat, die Startermischung und das Kalkhydrat jeweils mit Vorteil in einem Anteil von 0,2 bis 4 Gew.-% in der Bindemittelmischung enthalten. In der Praxis hat sich herausgestellt, dass gerade die vorgenannten Anteile zu besonders festen Zementen führen, die aus der Bindemittelmischung hergestellt werden, obwohl der Anteil an Portlandzement reduziert ist.

In einer besonders bevorzugten Ausgestaltung der Erfindung sind die Bestandteile Calciumformiat, Startermischung und Kalkhydrat in einem Massenverhältnis relativ zueinander enthalten, bei dem keine der drei Bestandteile mehr als zweieinhalbmal soviel, insbesondere mehr als zweimal soviel, enthalten ist, wie einer der beiden anderen Bestandteile. Gerade diese Massenverhältnisse der drei Bestandteile zueinander führt zu besonders druckfesten Zementen mit früher Verbundfestigkeit, die aus den Bindemittelmischungen hergestellt werden.

Mit Vorteil enthält die Bindemittelmischung Flugasche gemäß DIN 450 Teil 1 in einem Anteil von 1 bis 20 Gew.-%. Besonders bevorzugt weist die Flugasche dabei eine spezifische Oberfläche von größer oder gleich 4000 cm2/g auf. Unabhängig hiervon enthält die Bindemittelmischung in einer vorteilhaften Ausgestaltung der Erfindung Tonerdezement mit einem Aluminium(III)-Oxid-Gehalt von mindestens 50% in einem Anteil von 0,1 bis 15 Gew.-%. Der Zusatz der Flugasche und des Tonerdezements führt jeweils unabhängig voneinander dazu, dass die Druckfestigkeit und die frühe Verbundfestigkeit des mit der Bindemittelmischung hergestellten Zements weiter verbessert wird.

In einer besonders bevorzugten Ausgestaltung der Erfindung enthält die Bindemittelmischung zumindest eine stickstoffhaltige Verbindung in einem Anteil von 0,1 bis 2,5 Gew.-%. Der Stickstoff in der Verbindung weist dabei die Oxidationsstufe minus drei auf. Besonders bevorzugt ist die stickstoffhaltige Verbindung Harnstoff. Der Stickstoffanteil erhöht sowohl die Druckfestigkeit als auch die frühe Verbundfestigkeit eines mit der Bindemittelmischung hergestellten Zements deutlich. Weshalb dem so ist, konnte bisher nicht aufgeklärt werden. Eine derartige Wirkung wird in der einschlägigen Literatur auch in anderem Zusammenhang nicht beschrieben.

Mit Vorteil enthält die Bindemittelmischung Methylcellulose in einem Anteil von 0,2 bis 1,5 Gew.-%. Der Zusatz von Methylcellulose führt dazu, dass die Festigkeit des mit der Bindemittelmischung hergestellten Zements weiter verbessert werden kann.

Selbstverständlich kann die Bindemittelmischung weitere übliche Zusatz- und Hilfsstoffe enthalten.

Die Erfindung wird ferner durch eine Trockenmörtelzusammensetzung gelöst, die eine Bindemittelzusammensetzung der vorgenannten Art in einem Anteil zwischen 10 und 80 Gew.-% und Gesteinskörnungen, insbesondere Quarzsand, in einem Anteil von 20 bis 90 Gew.-% enthält. Diese Mischungsverhältnisse haben sich als besonders geeignet zur Herstellung von Zement, Beton, Mörtel und Estrich erwiesen.

Nachfolgend wird ein Ausführungsbeispiel der Erfindung näher beschrieben:

In einem ersten Versuch (Nullversuch) wird aus einer Trockenmörtelzusammensetzung enthaltend 75 Gew.-% Quarzsand und 25 Gew.-% einer Bindemittelmischung, die ausschließlich aus 10 Gew.-% Portlandzement und 90 Gew.-% Hüttensand besteht, ein erster Prüfkörper gemäß DIN EN 196 Teil 1 (Zementnormprüfung) und ein zweiter Prüfkörper gemäß DIN EN 1015 Teil 11 (Mörtel für Mauerwerk-Prüfung) hergestellt. Die beiden Prüfkörper werden einer Lagerung gemäß der in der DIN EN 196 Teil 1 bzw. DIN EN 1015 Teil 11 vorgesehenen Bedingungen für 28 Tage unterzogen. Anschließend wird die Biegezugfestigkeit und die Druckfestigkeit ermittelt für den ersten Prüfkörper nach DIN EN 196 Teil 1 und für den zweiten Prüfkörper nach DIN EN 1015 Teil 11 ermittelt. Der erste Prüfkörper (Zementnormprüfung) wies eine Biegezugfestigkeit von 7,4 N/mm2 und eine Druckfestigkeit von 24,4 N/mm2 auf. Der zweite Prüfkörper (Mauerwerksnormprüfung) wies eine Biegezugfestigkeit von 3,0 N/mm2 und eine Druckfestigkeit von 23,4 N/mm2 auf.

In einer weiteren Versuchsreihe werden ein dritter und ein vierter Prüfkörper ebenfalls aus einer Trockenmörtelzusammensetzung hergestellt, die 25 Gew.-% einer Bindemittelmischung und 75 Gew.-% Quarzsand enthält. Die Bindemittelmischung besteht jedoch zu 9,1% aus Portlandzement, zu 81,8% aus Hüttensand und jeweils zu 3% aus Calciumformiat, Kalkhydrat und der Startermischung gemäß Unteranspruch 2. Die Prüfkörper wurden hier ebenfalls nach den oben genannten Normen (Zementnormprüfung, Mauerwerknormprüfung) hergestellt und einer Lagerung von 28 Tagen unterzogen. Anschließend wurde auch hier mit den gleichen Prüfmethoden die Biegezugfestigkeit und die Druckfestigkeit ermittelt. Der dritte Prüfkörper (Zementnormprüfung) hergestellt, gelagert und analysiert nach DIN EN 196 Teil 1 wies eine Biegezugfestigkeit von 7,5 und eine Druckfestigkeit von 37,9 N/mm2 auf. Der vierte Prüfkörper (Mauerwerksnormprüfung) hergestellt, gelagert und analysiert nach DIN EN 1015 Teil 11 wies eine Biegezugfestigkeit von 8,4 N/mm2 und eine Druckfestigkeit von 43,1 N/mm2 auf.

In einer dritten Versuchsreihe sollte aus einer Trockenmörtelzusammensetzung entsprechend der Trockenmörtelzusammensetzung der ersten Versuchsreihe (Nullversuch) jedoch mit einem Anteil von 3 Gew.-% der Startermischung gemäß Unteranspruch 2 hergestellt werden. Es zeigte sich jedoch, dass eine normgerechte Herstellung der Prüfkörper nicht möglich war, da die Trockenmörtelzusammensetzung unmittelbar versteifte und in der Folge nicht durchzog.

Die Versuchsreihen zeigten, dass die Druckfestigkeit bei einer Verwendung der erfindungsgemäßen Trockenmörtelzusammensetzung mit der erfindungsgemäßen Bindemittelmischung zur Herstellung eines Mörtels somit etwa verdoppelt wird und sich eine erhöhte Biegezugfestigkeit einstellt.

## Patentansprüche

1. Bindemittelmischung enthaltend:
- 1,5 bis 15,0 Gew.-% Portlandzement,
- 20 bis 97,2 Gew.-% Hüttensand,
- 0,1 bis 5 Gew.-% Calciumformiat,
- 0,1 bis 5 Gew.-% Kalkhydrat und
- 0,1 bis 5 Gew.-% einer Startermischung aus amorphem, wasserfreiem Calcium-Aluminat, deren oxidische Zusammensetzung aus Calciumoxid, Aluminiumoxid und Schwefeltrioxid besteht,
wobei die Bestandteile Calciumformiat, Startermischung und Kalkhydrat in einem Massenverhältnis relativ zueinander enthalten sind, bei dem keiner der drei Bestandteile mehr als dreimal soviel enthalten ist, wie einer der beiden anderen Bestandteile.

2. Bindemittelmischung nach einem der vorhergehenden Ansprüche, **dadurch gekennzeichnet, dass** die oxidische Zusammensetzung der Startermischung zu 20 bis 25 Gew.-% aus Aluminium(III)-oxid, zu 38 bis 45 Gew.-% aus Calciumoxid und zu 25 bis 30 Gew.-% aus Schwefeltrioxid besteht.

3. Bindemittelmischung nach einem der vorhergehenden Ansprüche, **dadurch gekennzeichnet, dass** Portlandzement in einem Anteil von weniger als 9 Gew.-%, insbesondere weniger als 5 Gew.-%, enthalten ist.

4. Bindemittelmischung nach einem der vorhergehenden Ansprüche, **dadurch gekennzeichnet, dass** Calciumformiat, die Startermischung und Kalkhydrat jeweils in einem Anteil von 0,2 bis 4 Gew.-% enthalten sind.

5. Bindemittelmischung nach einem der vorhergehenden Ansprüche, **dadurch gekennzeichnet, dass** die Bestandteile Calciumformiat, die Startermischung und Kalkhydrat in einem Massenverhältnis relativ zueinander enthalten sind, bei dem keiner der drei Bestandteile mehr als zweieinhalb soviel, insbesondere mehr als zweimal soviel, enthalten ist, wie einer der beiden anderen Bestandteile.

6. Bindemittelmischung nach einem der vorhergehenden Ansprüche, **dadurch gekennzeichnet, dass** die Bindemittelmischung Flugasche gemäß DIN EN 450 Teil 1 in einem Anteil von 1 bis 20 Gew.-% enthält.

7. Bindemittelmischung nach Anspruch 6, **dadurch gekennzeichnet, dass** die Flugasche eine spezifische Oberfläche von größer oder gleich 4000 cm²/g aufweist.

8. Bindemittelmischung nach einem der vorhergehenden Ansprüche, **dadurch gekennzeichnet, dass** die Bindemittelmischung Tonerdezement mit einem Aluminium(III)-oxid-Gehalt von mindestens 50 % in einem Anteil von 0,1 bis 15 Gew.-% enthält.

9. Bindemittelmischung nach einem der vorhergehenden Ansprüche, **dadurch gekennzeichnet, dass** die Bindemittelmischung zumindest eine stickstoffhaltige Verbindung in einem Anteil von 0,1 bis 2,5 Gew.-% enthält, wobei der Stickstoff in der Verbindung die Oxidationsstufe minus drei aufweist.

10. Bindemittelmischung nach Anspruch 9, **dadurch gekennzeichnet, dass** die stickstoffhaltige Verbindung Harnstoff ist.

11. Bindemittelmischung nach einem der vorhergehenden Ansprüche, **dadurch gekennzeichnet, dass** die Bindemittelmischung Methylcellulose in einem Anteil von 0,2 bis 1,5 Gew.-% enthält.

12. Trockenmörtelzusammensetzung enthaltend eine Bindemittelmischung nach einem der vorgehenden Ansprüche in einem Anteil zwischen 10 und 80 Gew.-% und Gesteinskörnungen, insbesondere Quarzsand, in einem Anteil von 20 bis 90 Gew.-%.

## Claims

1. Binder mixture, containing:
- 1.5 to 15.0 wt.% Portland cement,
- 20 to 97.2 wt.% granulated slag,
- 0.1 to 5 wt.% calcium formate,
- 0.1 to 5 wt.% calcium hydroxide, and
- 0.1 to 5 wt.% a starter mixture made of amorphous, anhydrous calcium aluminate, the oxidic composition of which consists of calcium oxide, aluminium oxide and sulphur trioxide,
wherein the constituents calcium formate, starter mixture and calcium hydroxide are contained in a mass ratio relative to one another, in which ratio none of the three constituents is contained in an amount that is more than three times that of one of the other two constituents.

2. Binder mixture according to any of the preceding claims, **characterised in that** the oxidic composition of the starter mixture consists of 20 to 25 wt.% aluminium(III) oxide, 38 to 45 wt.% calcium oxide and 25 to 30 wt.% sulphur trioxide.

3. Binder mixture according to either of the preceding claims, **characterised in that** Portland cement is contained in a proportion of less than 9 wt.%, in particular less than 5 wt.%.

4. Binder mixture according to any of the preceding claims, **characterised in that** calcium formate, the starter mixture and calcium hydrate are each contained in a proportion of 0.2 to 4 wt.%.

5. Binder mixture according to any of the preceding claims, **characterised in that** the constituents calcium formate, the starter mixture and calcium hydrate are contained in a mass ratio relative to one another, in which ratio none of the three constituents is contained in an amount that is more than two and a halftimes, in particular more than twice, that of one of the other two constituents.

6. Binder mixture according to any of the preceding claims, **characterised in that** the binder mixture contains fly ash according to DIN EN 450-1 in a proportion of 1 to 20 wt.%.

7. Binder mixture according to claim 6, **characterised in that** the fly ash has a specific surface area greater than or equal to 4000 cm²/g.

8. Binder mixture according to any of the preceding claims, **characterised in that** the binder mixture contains aluminous cement, having an aluminium(III) oxide content of at least 50%, in a proportion of 0.1 to 15 wt.%.

9. Binder mixture according to any of the preceding claims, **characterised in that** the binder mixture contains at least one nitrogenous compound in a proportion of 0.1 to 2.5 wt.%, the nitrogen in the compound having an oxidation number of minus three.

10. Binder mixture according to claim 9, **characterised in that** the nitrogenous compound is urea.

11. Binder mixture according to any of the preceding claims, **characterised in that** the binder mixture contains methyl cellulose in a proportion of 0.2 to 1.5 wt.%.

12. Dry mortar composition containing a binder mixture according to any of the preceding claims in a proportion between 10 and 80 wt.% and aggregates, in particular silica sand, in a proportion of 20 to 90 wt.%.

## Revendications

1. Mélange liant contenant :
- 1,5 à 15,0 % en poids de ciment Portland,
- 20 à 97,2 % en poids de sable de fonderie,
- 0,1 à 5 % en poids de formiate de calcium,
- 0,1 à 5 % en poids de chaux hydratée et
- 0,1 à 5 % en poids d'un mélange de départ constitué d'aluminate de calcium anhydre amorphe dont la composition en oxydes est constituée d'oxyde de calcium, d'oxyde d'aluminium et de trioxyde de soufre,
les constituants formiate de calcium, mélange de départ et chaux hydratée étant contenus dans un rapport en masse entre eux dans lequel aucun des trois constituants n'est contenu à plus de trois fois l'un des deux autres composants.

2. Mélange liant selon l'une des revendications précédentes, **caractérisé en ce que** la composition en oxydes du mélange de départ est de 20 à 25 % en poids d'oxyde d'aluminium (III), de 38 à 45 % en poids d'oxyde de calcium et de 25 à 30 % poids de trioxyde de soufre.

3. Mélange liant selon l'une des revendications précédentes, **caractérisé en ce que** le ciment Portland est contenu dans une proportion inférieure à 9 % en poids, en particulier inférieure à 5 % en poids.

4. Mélange liant selon l'une des revendications précédentes, **caractérisé en ce que** le formiate de calcium, le mélange de départ et la chaux hydratée sont chacun contenus dans une proportion de 0,2 à 4 % en poids.

5. Mélange liant selon l'une des revendications précédentes, **caractérisé en ce que** les constituants formiate de calcium, mélange de départ et chaux hydratée sont contenus dans un rapport en masse entre eux dans lequel aucun des trois constituants n'est contenu à plus de deux fois et demi l'un des deux autres composants.

6. Mélange liant selon l'une des revendications précédentes, **caractérisé en ce que** le mélange liant contient des cendres volantes selon la norme DIN EN 450 Partie 1 dans une proportion de 1 à 20 % en poids.

7. Mélange liant selon la revendication 6, **caractérisé en ce que** les cendres volantes ont une surface spécifique supérieure ou égale à 4000 cm²/g.

8. Mélange liant selon l'une des revendications précédentes, **caractérisé en ce que** le mélange liant contient du ciment d'alumine, ayant une teneur en oxyde d'aluminium (III) d'au moins 50 %, dans une proportion de 0,1 à 15 %.

9. Mélange liant selon l'une des revendications précédentes, **caractérisé en ce que** le mélange liant contient au moins un composé azoté dans une proportion de 0,1 à 2,5 % en poids, l'atome d'azote du composé ayant le degré d'oxydation moins trois.

10. Mélange liant selon la revendication 9, **caractérisé en ce que** le composé azoté est l'urée.

11. Mélange liant selon l'une des revendications précédentes, **caractérisé en ce que** le mélange liant contient de la méthylcellulose à raison de 0,2 à 1,5 % en poids.

12. Composition de mortier sec contenant un mélange liant selon l'une des revendications précédentes dans une quantité comprise entre 10 et 80 % en poids et des granulats, en particulier du sable de quartz, dans une proportion de 20 à 90 % en poids.
